# EUROPÄISCHE PATENTANMELDUNG

(11) **EP 1 779 956 A1**
(43) Veröffentlichungstag der Anmeldung: **02.05.2007**
(21) Anmeldenummer: 06120687.6
(22) Anmeldetag: 14.09.2006
(51) Int. Cl.: B23K 3/06, B23K 1/08, B23K 101/42

(54) **Lötvorrichtung mit einer Gasverteilung**

(30) Priorität: 28.10.2005 DE 102005052076
(71) Anmelder: Messer Group GmbH, 65843 Sulzbach (DE); Messer Austria GmbH, 2352 Gumpoldskirchen (AT)
(72) Erfinder: Hatz, Gottfried, 8461 Ehrenhausen (AT); Tauchmann, Jens, 47269 Duisburg (DE)

(57) **Zusammenfassung**

Die Erfindung betrifft eine Lötvorrichtung (16) zum Löten von Flachbaugruppen (12) mit einer Gasverteilung (19,31) zum Einlassen und Verteilen eines nichtoxidierenden Gas in eine mindestens einen Lotbehälter (22) abdeckende Ummantelung (17,20,21), durch die Flachbaugruppen (12) transportiert und während ihres Transportes mit einer Lotwelle (24) in Kontakt gebracht werden.

Um eine Schutzgasatmosphäre mit geringen Restssauerstoffwerten zu erzeugen, weist die Gasverteilung (19,31) Düsenkörper (41,43) auf, die mit voneinander beabstandet angeordneten Austrittsdüsen (44) ausgerüstet ist und die Mittel zur zumindest weitgehend gleichmäßigen Verteilung des in den Düsenkörper eingeleiteten Schutzgases auf die Austrittsdüsen vorgesehen sind. Als bevorzugte Mittel zur gleichmäßigen Verteilung des Schutzgases sind die Austrittsdüsen als in Richtung der Gasströmung schräg verlaufende Durchführungen ausgebildet.

## Beschreibung

Die Erfindung betrifft eine Lötvorrichtung zum Löten von Flachbaugruppen mit einer mindestens einen Lotbehälter abdeckenden Ummantelung, durch die Flachbaugruppen transportiert und während ihres Transportes mit einer Lotwelle in Kontakt gebracht werden, und mit einer Gasverteilung zum Einlassen und Verteilen eines Schutzgases in die Ummantelung, welche Gasverteilung zumindest einen sich quer zur Transportrichtung der Flachbaugruppen im Bereich des Lotbehälters erstreckenden, an einer Gaseintrittsstelle mit einer Gasversorgung strömungsverbundenen Düsenkörper mit Austrittsdüsen für das Schutzgas umfasst.

Bei der Inertisierung von Wellenlötanlagen werden unterschiedlich ausgebildete und angeordnete Systeme zur Gasverteilung eingesetzt. Sie haben die Aufgabe, die Ummantelung des Lotbehälters zu inertisieren und damit die Qualität der Lötverbindungen den gewachsenen Anforderungen anzupassen. Mit dem Einsatz von Schutzgasen, insbesondere Stickstoff, können die Prozeßfenster hinreichend vergrößert werden, die Benetzung verbessert und die Krätzebildung reduziert werden.

Dabei wird beispielsweise über gebündelte, ausrichtbare Gasströme eine Ringströmung erzeugt, die die Transportbahn der zu verlötenden Flachbaugruppen quert (DE 42 19 913 A1). In der EP 0 500 135 B1 geschieht die Gaszufuhr vorzugsweise mit einer begrenzten Rate, um aus den Gasverteilern in einer laminaren Strömung herauszufließen. Da die den Lotbehälter umschließende Haube so kurz ausgeführt ist, dass der vorangehende Teil einer Leiterplatte mit der Lotwelle in Kontakt kommen kann, während der nachfolgende Teil aus der Einlaßöffnung herausragt, führen erste und zweite Gasverteiler nicht oxidierende Gase zu, die eine Atmosphäre für die Unter- und die Oberseite einer eintretenden Leiterplatte und das in Verbindung bringen mit einer Lotwelle bereitstellen. Ähnlich dazu kann der vorangehende Teil einer Leiterplatte aus der Auslaßöffnung herausragen, während sich der nachfolgende Teil in der Lotwelle befindet. Daher führen zweite und dritte Gasverteiler nicht oxidierende Gase entsprechend zu. In der DE 41 42 436 A1 wird dagegen oberhalb der Flachbaugruppen ein Diffuser angeordnet.

Alle derzeitigen Gasverteilungen basieren auf einfachen Systemen der Gasverteiler. Das Schutzgas gelangt über Gaszuführungen zu dem Gasverteiler und wird über Poren (Sintermetalle oder Keramik) gemäß der DE 41 42 436 A1 oder Rohröffnungen gemäß der EP 0 500 135 B1 der Ummantelung zugeführt. Gasverteiler, die nur eine Kammer mit Poren aufweisen, haben keine homogene Verteilung des Schutzgases über den Poren. Gasverteiler mit Bohrungen oder Schlitzen an der Oberfläche setzen das Schutzgas über die Ausbildung eines Freistrahles frei. Dabei kommt es zu einer gerichteten Strömung. Aufgrund des Freistrahlprinzips wird die Umgebungsatmosphäre angesaugt. Dies führt zu gerichteten Strömungen und Turbulenzen in der Ummantelung und als Folge dieser gerichteten Strömungen oder Turbulenzen, erfolgt eine Vermischung des Schutzgases mit Sauerstoff aus der Atmosphäre innerhalb der Ummantelung der Lötvorrichtung, und die benötigte Schutzgasmenge zur Erreichung eines geforderten Restsauerstoffwertes wird entsprechend größer. Der in der EP 0 500 135 B1 dargestellte Gasverteiler besteht aus einem Gasversorgungsrohr, wobei über die Gaszufuhr mit einer begrenzten Rate eine laminare Strömung aus dem Gasverteiler herausfließen soll um eine Freistrahlbildung zu unterdrücken. Dies führt zu langen Flutungszeiten der Ummantelung und zu langen Reaktionszeiten beim Eindringen von Sauerstoff in die Ummantelung.

Der in der DE 41 42 436 A1 vorgeschlagene Diffuser aus Sintermetall erzeugt zwar keine gerichtete Strömung, gibt das Schutzgas dafür in alle Richtungen ab. Darüber hinaus sind Sintermetallkörper anfällig gegenüber Verschmutzungen.

In der EP 1 035 939 B1 sind Düsen zum Einlassen und Verteilen eines nichtoxidierenden Gases in eine Lötvorrichtung beschrieben. Die Düsen sind quer zur Längserstreckung des Lötbehälters angeordnet und mit zum Lotbehälter gerichteten, sich schlitzförmig sich über ganze die Breite des Lotbehälters erstreckenden Austrittsflächen versehen. Um turbulente Strömungen beim Austritt des Gases zu verhindern, ist im Innern der Düse eine Entspannungskammer vorgesehen, die über mindestens eine Öffnung mit einer weiteren Entspannungskammer verbunden ist, in der wiederum die Austrittsflächen vorgesehen sind. Mit dieser Düse wird das Problem der Vermischung des zugeführten Inertgases mit Sauerstoff aus der Umgebungsatmosphäre zuverlässig vermieden, nachteilig ist jedoch, dass auch mit dieser Einrichtung das zugeführte Inertgas nur sehr ungleichmäßig über den Lötbehälter verteilt wird. Um zu einer vorgegebenen minimalen Sauerstoffkonzentration im gesamten Lotbadbereich zu kommen, muss daher eine vergleichsweise große Menge an Schutzgas zugeführt werden.

Der Erfindung liegt daher die Aufgabe zugrunde, eine Lötvorrichtung zu schaffen, die die Nachteile des Standes der Technik überwindet und bei der der Lötbehälter gleichmäßig mit dem zugeführten Schutzgas beaufschlagt wird.

Diese Aufgabe wird erfindungsgemäß dadurch gelöst, dass dass der Düsenkörper über zumindest einen Teil seiner Längserstreckung mit voneinander beabstandet angeordneten Austrittsdüsen ausgerüstet und mit Mitteln zur zumindest weitgehend gleichmäßigen Verteilung des in den Düsenkörper eingeleiteten Schutzgases auf die Austrittsdüsen versehen ist.

Es hat sich nämlich gezeigt, dass ein wesentlicher Teil der beim Gegenstand der EP 1 035 939 B1 auftretenden Probleme den aufgrund des komplexen Aufbaus bedingten hohe Strömungswiderständen in der Düse geschuldet sind. Diese Strömungswiderstände in den Entspannungsräumen führen dazu, dass die schlitzförmige Austrittsfläche nur ungleichmäßig mit Schutzgas beaufschlagt wird und in der Folge das Schutzgas auch auf der Lotbadoberfläche ungleichmäßig verteilt wird. Die Erfindung überwindet dieses Problem dadurch, dass zum einen die geschlitzte Austrittsfläche durch diskrete Austrittsdüsen ersetzt wird, durch die das Schutzgas unmittelbar aus dem Düsenkörper in den Innenbereich der Lötvorrichtung eingedüst wird, und zum andern, dass durch geeignete Mittel erreicht wird, dass die längs eines Düsenkörpers angeordneten Austrittsdüsen gleichmäßig mit Schutzgas beaufschlagt werden. Durch die Erfindung wird eine homogene Verteilung der eingesetzten Schutzgasmenge über das gesamte Düsensystem erreicht. Somit kann die eingesetzte Gasmenge gegenüber Vorrichtungen nach dem Stande der Technik bei gleicher Inertisierungsleistung, d.h. vorgegebener minimaler Sauerstoffkonzentration über dem gesamten Lotbadbereich, erheblich verringert werden. Die Erfindung kommt ohne ein aufwändiges System von Entspannungskammern aus.

Vorteilhafterweise sind die Austrittsdüsen als sich durch die Wand des Düsenkörpers erstreckende Durchführungen ausgebildet, die die nach außen hin in einer von einer Gaseintrittsstelle des Düsenkörpers weg weisenden Richtung geneigt angeordnet sind. Eine solche, gegenüber der Längsachse des spitzwinklige Anordnung zeichnet sich insbesondere durch ein breites Arbeitsfenster auf, d.h. bei sich ändernden Durchflussmengen des eingesetzten Schutzgases wird die Verteilung des Gases auf die einzelnen Austrittsdüsen nur unwesentlich beeinflusst.

Um die Homogenität der Verteilung des Schutzgases in der Lötvorrichtung zu verbessern ist es zweckmäßig, ein beabstandet von dem Düsenkörper vor den Austrittsdüsen angeordnetes Umlenkblech vorzusehen, mittels dessen die den Austrittsdüsen entweichende Gasströmung in eine zur vorherigen Strömungsrichtung im wesentlichen rechtwinklige oder gegenüberliegende Richtung umgelenkt wird.

Eine vorteilhafte Ausgestaltung der Erfindung sieht vor, zwischen den Austrittsdüsen des Düsenkörpers und dem Umlenkblech einen Strömungsdämpfer, beispielsweise eine Füllung aus Stahlwolle, anzuordnen. Hierdurch wird die Strömung des aus den Austrittsdüsen austretenden Gases gebremst und damit die Gefahr von Rückvermischungen wirksam vermieden.

Eine weitere Unterdrückung gerichteter Strömungen kann dadurch erzielt werden, dass den Austrittsdüsen ein Diffusor zum Umlenken der aus den Austrittsdüsen austretenden gerichteten Gasströmungen in eine breite Richtungsverteilung zugeordnet ist.

Eine besonders wirksames Mittel, um das Schutzgas gleichmäßig auf die Austrittsdüsen des Düsenkörpers zu verteilen ist, den Düsenkörper so auszugestalten, dass sich der Innenquerschnitt des Düsenkörpers - von der Gaseintrittsstelle her gesehen- verjüngt. Dadurch wird der längs des Düsenkörpers aufgrund des Strömungswiderstandes im Düsenkörper auftretende Druckabfall durch eine Vergrößerung der Strömungsgeschwindigkeit kompensiert.

Ein weiteres vorteilhaftes Mittel, um das Schutzgas gleichmäßig auf die Austrittsdüsen des Düsenkörpers zu verteilen ist, den Düsenkörper so auszugestalten, dass sich der Abstand aufeinander folgender Austrittsdüsen mit zunehmenden Abstand von der Gaseintrittstelle verkleinert.

Als ein abermals vorteilhaftes Mittel, um das Schutzgas gleichmäßig auf die Austrittsdüsen des Düsenkörpers zu verteilen ist in einer Weiterbildung der Erfindung vorgesehen, den Düsenkörper so auszugestalten, dass sich die Querschnittsöffnung der Austrittsdüsen mit zunehmendem Abstand von der Gaseintrittsstelle vergrößert.

Um den Strömungswiderstand zu senken, ist es zweckmäßig, dass sich der Querschnitt der Austrittsdüsen zur Außenseite des Düsenkörpers konisch erweitert. Dabei sollte die Stärke der konischen Erweiterung dem Volumenstrom durch die jeweilige Austrittsdüse angepasst sein.

Eine weitere bevorzugte Ausgestaltung der Erfindung sieht vor, in einer Lötvorrichtung mindestens einen oberhalb und mindestens einen unterhalb der durch den Transport der Flachbaugruppen definierten Ebene angeordneten Gasverteiler vorzusehen. Bevorzugt umgibt dabei der unterhalb der Flachbaugruppen angeordnete Gasverteiler mindestens die Lotwelle. Dadurch wird ein Verdrängungsgaspolster an der Stelle erzeugt, an der das Schutzgas primär vorhanden sein muss, wobei durch die Anordnung oberhalb des erwärmten Lotes das Verdrängungsgaspolster unmittelbar thermisch umgelenkt wird.

Ein Ausführungsbeispiel der Erfindung ist in der Zeichnung dargestellt und wird im folgenden näher beschrieben:
Es zeigen in schematischen Ansichten
   - Figur 1: eine Darstellung einer Ummantelung eines Lotbehälters mit einer Gasverteilung
   - Figur 2: eine Draufsicht des unter den Flachbaugruppen angeordneten Gasverteilers
   - Figur 3: ein Längsschnitt durch einen Düsenkörper eines Gasverteilers entlang der Linie III - III in Fig. 2
   - Figur 4: einen Querschnitt des Düsenkörpers aus Fig. 3 entlang der Linie IV-IV in Fig. 3

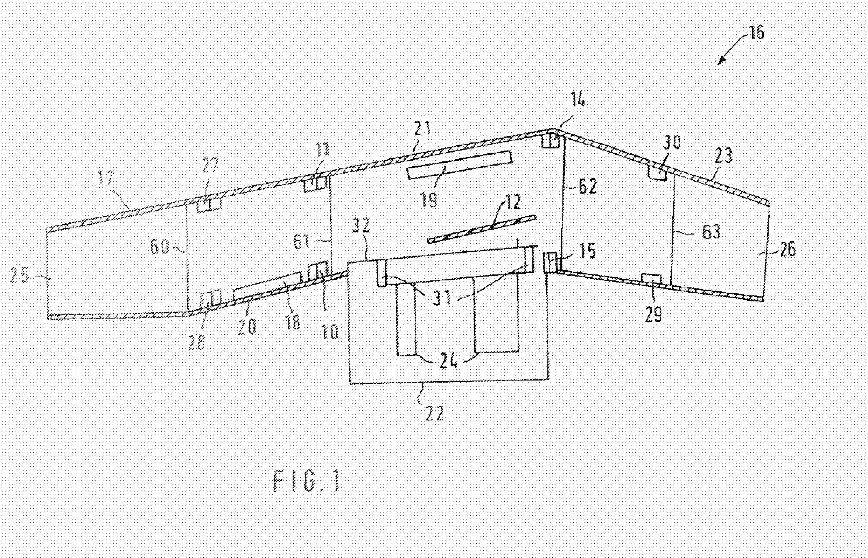

In Figur 1 ist eine Lötvorrichtung 16 im Schnitt schematisch dargestellt, die im wesentlichen aus einem Vortunnel 17, einem Eingangstunnel 20 der Heizmittel 18 umfassen kann, einer den Lotbehälter 22 umgebenden Haube 21 und einem Auslauftunnel 23 besteht. Unter Ummantelung wird im vorliegenden Fall mindestens die den Lotbehälter 22 abdeckende Haube 21 verstanden. Die Lotwelle ist mit 24 und eine Leiterplatte mit 12 bezeichnet. Die Leiterplatte 12 wird durch die Ummantelung 17, 20, 21 und 23 transportiert und während ihres Transports durch die Ummantelung mit einer Lotwelle 24 in dem Lotbehälter 22 in Kontakt gebracht. Die Ummantelung enthält einen Einlaß 25 auf einer Einlaßseite und einen Auslass 26 für die Flachbaugruppen auf einer Auslassseite. Der Ein- und Auslass 25, 26 wird vorzugsweise durch Klappen 60, 61, 62, 63 und Gasvorhänge von der Umgebung abgeschirmt. Die Düsen 10, 11, 14, 15, 27, 28, 29, 30 sind als Spaltdüsen ausgelegt, die schmale Gasstrahlen erzeugen. In Figur 1 sind jeweils zwei den Ein- und Auslass abdichtende Klappen 60, 61 und 62, 63 und Gasvorhänge erzeugende Düsen 10, 11, 27, 28 und 14, 15, 29, 30, die Schleusen bilden, vorgesehen. Es ist selbstverständlich auch eine Ausbildung mit nur einer Klappe 61 bzw. 62 und einem Gasvorhang 10, 11 bzw. 14, 15 möglich.

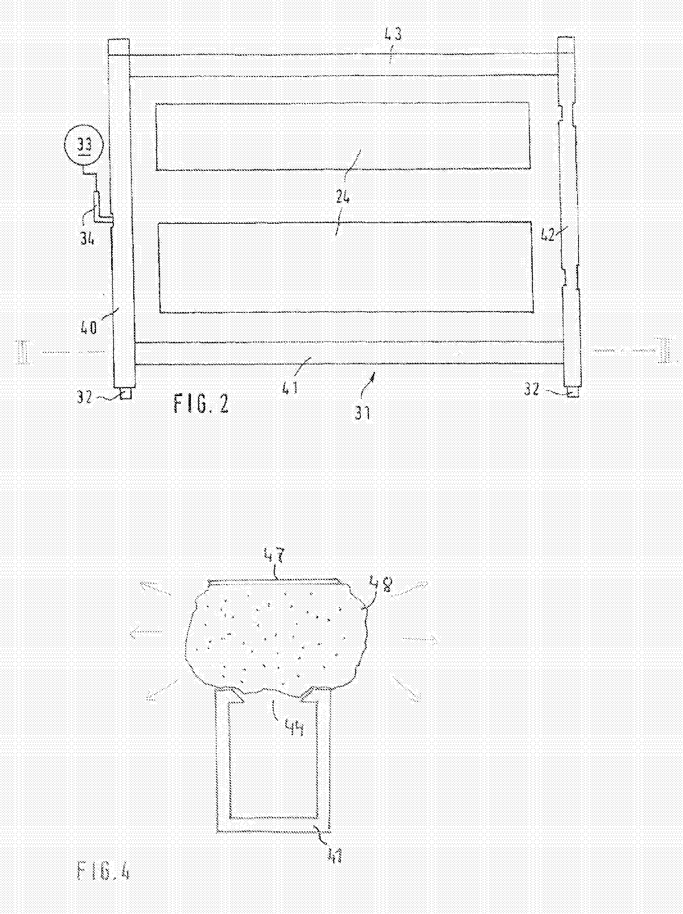

In den Figuren 1 und 2 ist ein über der Leiterplatte 12 angeordneter Gasverteiler 19 und ein unter der Leiterplatte 12, die Lotwelle 24 umgebender Gasverteiler 31 angeordnet. Der Gasverteiler 31 begast die Lotbadoberfläche und die Lotwellen 24. Der Gasverteiler 31 umschließt rahmenförmig eine oder beide Lotwellen 24 und umfasst zwei seitliche rohrförmig ausgebildete Arme 40, 42 zwischen den sich Düsenkörper 41,42 erstrecken. Die Düsenkörper 41, 43 sind so angeordnet, dass sich der erste Düsenkörper 41 - in Transportrichtung der Leiterplatten gesehen - vor der ersten der beiden Lotwellen 24 und der zweite Düsenkörper 43 hinter der zweiten der Lotwellen 24 befindet. Das Ablaufen des Lotes wird durch diesen Gasverteiler 31 nicht beeinträchtigt. Der Gasverteiler 31 wird auf den Lotbehälter 22 abgelegt, wobei eine Seite des Gasverteilers 31 den Freiboard des Lotbehälters 22 nutzt und mit Auflageelement 32 unter einer Schräge so aufliegt, dass die Flachbaugruppen mit den zu verlötenden Baugruppen über den Gasverteiler 31 transportiert werden können. Der Gasverteiler 31 taucht nicht in das Lotbad ein. Über die Gasversorgung 33 und einer in den Arm 40 einmündenden Gasversorgungsleitung 34 wird der gesamte Gasverteiler 31 und damit die Düsenkörper 41,43 mit einem Schutzgas, beispielsweise ein nicht oxidierendes Gas, versorgt.

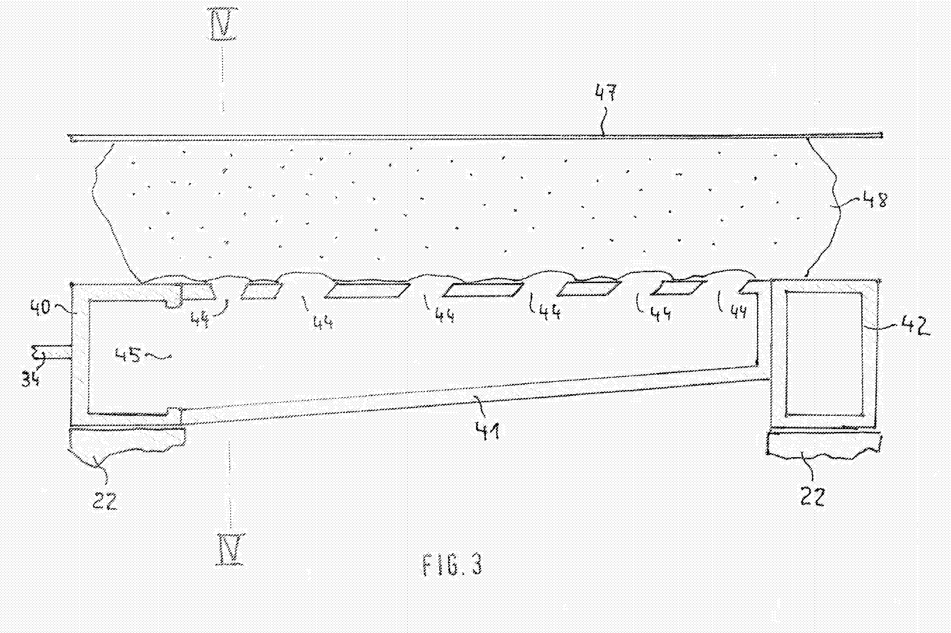

In Figur 3 ist ein Längsschnitt, in Fig 4 ein Querschnitt durch den Düsenkörper 41 des Gasverteilers 31 dargestellt, wobei gleiche Bauteile mit gleichen Bezugsziffern versehen sind. Der sich zwischen den Armen 40, 42 erstreckende Düsenkörper 41 steht mit dem Innenraum des rohrförmig ausgebildeten Arms 40, in den die Gasversorgungsleitung 34 einmündet, an einer Gaseintrittsstelle 45 in Strömungsverbindung. An seiner vom Lotbehälter 22 abgewandten Seite ist der Düsenkörper 41 mit mehreren Austrittsdüsen 44 mit rundem oder quer oder parallel zur Längserstreckung des Düsenkörpers 41 geschlitztem Querschnitt versehen. Die Austrittsdüsen 44 sind derart nebeneinander angeordnet, der sich der Abstand zweier aufeinanderfolgender Austrittsdüsen 44 mit zunehmendem Abstand von der Gaseintrittstelle 45 verkleinert. Zumindest die von der Gasaustrittstelle 45 weiter entfernt angeordneten - im Ausführungsbeispiel alle mit Ausnahme der unmittelbar der Gaseintrittstelle benachbarten - Austrittsdüsen 44 verlaufen schräg durch die Wand des Düsenkörpers 41, nach außen hin in Richtung von der Gaseintrittsstelle 45 weg weisend. Gleichzeitig erweitert sich der Querschnitt der Austrittsdüse 44 von Innen nach außen. Eine gesonderte Entspannungskammer ist im Düsenkörper 41 nicht vorgesehen. Der erfindungsgemäße Düsenkörper 41 besitzt dadurch einen erheblich geringeren Strömungswiderstand als das aus dem Stand der Technik bekannte Düsensystem.

Vom Düsenkörper 41 beabstandet ist den Austrittsdüsen 44 gegenüberliegend ein Umlenkblech 47 vorgesehen. Zwischen Düsenkörper 41 und Umlenkblech 47 ist ein Strömungsdämpfer 48 angeordnet. Im Ausführungsbeispiel handelt es sich bei dem Strömungsdämpfer 48 um Stahlwolle oder ein anderes hochporöses Material, das dazu geeignet ist, die aus den Austrittsdüsen 44 austretenden gerichteten Gasströme in eine breite Richtungsverteilung umzulenken.

Der oberhalb der Ebene der Flachbaugruppen 12 angeordnete Gasverteiler 19 ist im Prinzip in gleicher Weise aufgebaut wie der zuvor beschriebene Gasverteiler 31.

Beim Einsatz der Gasverteiler 19, 31 wird Schutzgas, insbesondere Stickstoff oder ein anderes Inertgas oder ein Gas mit anderen bevorzugten chemischen Eigenschaften, den Gasverteilern 19,31 zugeführt. Das Schutzgas strömt an der Gaseintrittsstelle 45 in den Düsenkörper 41 ein. Durch den Strömungswiderstand beim Durchströmen des Düsenkörpers 41 würde bei einem zylindrisch ausgebildeten Düsenkörper mit zunehmendem Abstand von der Gaseintrittstelle 45 der Druck des Schutzgases im Düsenkörper abnehmen; dies wird beim Düsenkörper 31 dadurch kompensiert, dass sich der Querschnitt des Düsenkörpers 31 mit zunehmendem Abstand von der Gaseintrittstelle 45 verringert. Die schräge Anordnung der Austrittsdüsen 44 führt zu einer gleichmäßigen Verteilung des Schutzgases in den Zwischenraum zwischen Düsenkörper 41 und Umlenkblech 47. Zudem führt die größere Häufigkeit von Austrittsdüsen 44 im von der Gaseintrittsstelle 45 gesehen hinteren Bereich des Düsenkörpers dazu, das der Gasaustritt in diesem Bereich begünstigt wird. Das aus den Austrittsdüsen 44 in gerichteten Strömen austretende Schutzgas wird durch den Strömungsdämpfer 48 gebremst und in einen diffusen Ausbreitungsmodus gezwungen. Das auf diese Weise sich bildende Schutzgaspolster verdrängt die den Gasverteiler umgebende Atmosphäre und flutet den Bereich des Lotbehälters und den Lotwellenbereich 24. Das Schutzgas verbreitet sich auf der Lotbadoberfläche, wird durch das heiße Lotbad erwärmt und steigt auf.

Das durch die oberhalb der Flachbaugruppen an der Ummantelung 21 angebrachten Gasverteiler 19 geführte Gas wird nach Durchlaufen des Strömungsdämpfers in eine zum Düsenkörper seitliche Richtung abgelenkt und bildet im Bereich um den Düsenkörper ein Schutzgaspolster aus, das sich allmählich auch in Richtung des Lotbehälters 22 ausweitet und sich schließlich mit dem aufsteigenden Schutzgas verbindet. Durch die Bildung von zwei in Richtung zum Lotbad aus den Gasverteilern austretenden Verdrängungsgaspolstern werden Restsauerstoffgehalte < 1000 ppm in < 3 Minuten, vorzugsweise < 2, erreicht.

Der gesamte Bereich des Lotbehälters 22 wird auf diese Weise mit dem Schutzgas geflutet, ohne dass eine Vermischung mit der umgebende Atmosphäre stattfindet.

### Bezugszeichenliste

- 10.: Düse
- 11.: Düse
- 12.: Leiterplatte
- 13.: -
- 14.: Düse
- 15.: Düse
- 16.: Lötvorrichtung
- 17.: Vortunnel
- 18.: Heizmittel
- 19.: -
- 20.: Eingangstunnel
- 21.: Haube
- 22.: Lötbehälter
- 23.: Auslauftunnel
- 24.: Lotwelle
- 25.: Einlass
- 26.: Auslass
- 27.: Düse
- 28.: Düse
- 29.: Düse
- 30.: Düse
- 31.: Gasverteiler
- 32.: Auflageelement
- 33.: Gasversorgung
- 34.: Gasversorgungsleitung
- 35-39.: -
- 40.: Arm
- 41.: Düsenkörper
- 42.: Düsenkörper
- 43.: Arm
- 44.: Austrittsdüse
- 45.: Gaseintrittstelle
- 46.: -
- 47.: Schutzblech
- 48.: Strömungsdämpfer
- 49-50.: -
- 60. - 64.: Klappen

## Patentansprüche

1. Lötvorrichtung zum Löten von Flachbaugruppen mit einer mindestens einen Lotbehälter (22) abdeckenden Ummantelung (17,20,21), durch die Flachbaugruppen (12) transportiert und während ihres Transportes mit einer Lotwelle (24) in Kontakt gebracht werden, und mit einer Gasverteilung (19,31) zum Einlassen und Verteilen eines Schutzgases in die Ummantelung (17,20,21), welche Gasverteilung (19,31) zumindest einen sich quer zur Transportrichtung der Flachbaugruppen (12) im Bereich des Lotbehälters (22) erstreckenden, an einer Gaseintrittsstelle mit einer Gasversorgung strömungsverbundenen Düsenkörper (41,43) umfasst,
**dadurch gekennzeichnet,**
**dass** der Düsenkörper (41,43) über zumindest einen Teil seiner Längserstreckung mit voneinander beabstandet angeordneten Austrittsdüsen (44) ausgerüstet ist und Mittel zur zumindest weitgehend gleichmäßigen Verteilung des in den Düsenkörper (41,43) eingeleiteten Schutzgases auf die Austrittsdüsen (44) vorgesehen sind.

2. Lötvorrichtung nach Anspruch 1, **dadurch gekennzeichnet, dass** die Austrittsdüsen (44) als sich durch die Wand des Düsenkörpers (41,43) erstreckende Durchführungen ausgebildet sind, die nach außen hin in einer von einer Gaseintrittsstelle (45) des Düsenkörpers (41) weg weisenden Richtung geneigt angeordnet sind.

3. Lötvorrichtung nach Anspruch 1 oder 2, **gekennzeichnet durch** ein beabstandet von dem Düsenkörper (41,43) vor den Austrittsdüsen (44) angeordnetes Umlenkblech (47), mittels dessen die den Austrittsdüsen (44) entweichende Gasströmung in eine im wesentlichen rechtwinklige oder gegenüberliegende Richtung umgelenkt wird.

4. Lötvorrichtung nach Anspruch 3, **dadurch gekennzeichnet, dass** zwischen den Austrittsdüsen des Düsenkörpers (41,43) und dem Umlenkblech (47) ein Strömungsdämpfer (48), beispielsweise eine Füllung aus Stahlwolle angeordnet ist.

5. Lötvorrichtung nach einem der vorhergehenden Ansprüche, **dadurch gekennzeichnet, dass** den Austrittsdüsen (44) ein Diffusor zum Umlenken des aus dem Düsenkörper (41,43) austretenden Gasstroms in eine breite Richtungsverteilung zugeordnet ist.

6. Lötvorrichtung nach einem der vorhergehenden Ansprüche, **dadurch gekennzeichnet, dass** sich der Innenquerschnitt des Düsenkörpers (41,43) - von der Gaseintrittsstelle (45) her gesehen- verjüngt.

7. Lötvorrichtung nach einem der vorhergehenden Ansprüche, **dadurch gekennzeichnet, dass** sich der Abstand aufeinander folgender Austrittsdüsen (44) mit zunehmenden Abstand von der Gaseintrittstelle (45) verkleinert.

8. Lötvorrichtung nach einem der vorhergehenden Ansprüche, **dadurch gekennzeichnet, dass** sich die Querschnittsöffnung der Austrittsdüsen (44) mit zunehmendem Abstand von der Gaseintrittsstelle (45) vergrößert.

9. Lötvorrichtungen nach einem der vorhergehenden Ansprüche, **dadurch gekennzeichnet, dass** sich der Querschnitt der Austrittsdüsen (44) zur Außenseite des Düsenkörpers (41,43) konisch erweitern wobei die Stärke der konischen Erweiterung dem Volumenstrom durch die jeweilige Austrittsdüse (44) angepasst ist.

10. Lötvorrichtung nach einem der vorhergehenden Ansprüche, **gekennzeichnet durch** mindestens einen oberhalb und mindestens einen unterhalb der **durch** den Transport der Flachbaugruppen (12) definierten Ebene angeordneten Gasverteiler (19,31).
